# EUROPEAN PATENT SPECIFICATION

(11) **EP 0 449 221 B1**
(45) Date of publication and mention of the grant of the patent: **02.01.1997**
(21) Application number: 91104794.2
(22) Date of filing: 26.03.1991
(51) Int. Cl.: G01N 27/00, G01B 7/34

(54) **Scanning probe microscope**
Rastertunnelmikroskop
Microscope à éffet tunnel

(30) Priority: 27.03.1990 JP 79567/90
(43) Date of publication of application: 02.10.1991
(73) Proprietor: OLYMPUS OPTICAL CO., LTD., Tokyo 151 (JP)
(72) Inventor: Okada, Takao, Hachioji-shi, Tokyo (JP); Yagi, Akira, Sagamihara-shi, Kanagawa-ken (JP); Sugawara,Yasuhiro, Minami-ku, Hiroshima-shi Hiroshima-ken (JP); Morita, Seizo, Fuchu-cho, Aki-gun, Hiroshima-ken (JP); Takase, Tsugiko,, Hachioji-shi, Tokyo (JP)
(74) Representative: KUHNEN, WACKER & PARTNER

(56) References cited:
- EP-A- 0 245 660
- WO-A-90/10304
- US-A- 4 724 318
- US-A- 4 941 753
- JAPANESE JOURNAL OF APPLIED PHYSICS vol. 28, no. 11, November 1989, TOKYO JP pages L2304 - L2306; S. MORITA ET AL: "Scanning tunneling potentiometry/spectroscopy (STP/STS)"
- JOURNAL OF VACUUM SCIENCE AND TECHNOLOGY: PART A. vol. 8, no. 1, February 1990, NEW YORK US pages 336 - 338; A. YAGI ET AL: "Differential conductance imaging under alternate current tunneling bias"
- JOURNAL OF MICROSCOPY vol. 152, no. 3, December 1988, OXFORD GB pages 871 - 875; P.J. BRYANT ET AL: "Scanning tunnelling and atomic force microscopy performed with the same probe in one unit"
- IBM TECHNICAL DISCLOSURE BULLETIN. vol. 32, no. 8B, January 1990, NEW YORK US pages 106 - 108; Anonymous: "Soft x-ray-produced inner-shell photoelectron scanning tunneling microscope"
- JOURNAL OF VACUUM SCIENCE AND TECHNOLOGY: PART A. vol. 8, no. 1, February 1990, NEW YORK US pages 327 - 329; M.O. WATANABE ET AL: "High-temperature scanning tunneling microscope"
- APPLIED PHYSICS LETTERS. vol. 52, no. 26, June 1988, NEW YORK US pages 2233 - 2235; P.J. BRYANT ET AL: "Scanning tunneling and atomic force microscopy combined"
- REVIEW OF SCIENTIFIC INSTRUMENTS. vol. 61, no. 6, June 1990, NEW YORK US pages 1664 - 1667; T. KATO ET AL: "A scanning tunneling microscopy/spectroscopy system for cross-sectional observations of epitaxial layers of semiconductors"

## Description

The present invention relates to a scanning probe microscope for measuring information of the surface of a sample scanning the surface of said sample with a probe as the latter is brought close to said surface, and in particular to a scanning probe microscope which is capable of obtaining different information on the surface of the same sample simultaneously.

A scanning tunneling microscope (thereafter called STM device), atomic force microscope (thereafter called AFM device) and the like have recently been developed as an apparatus that can observe the very small configuration on the surface of a sample at an atomic level, so that these apparatuses may be used in various studies or researches.

The STM device is used, as disclosed in USP 4,343,993, to measure the configuration of surface of a sample in the resolution on an atomic level; this particular measurement process basically utilizes a tunnel current I which depends on the distance S between the probe and sample and a tunnel barrier height exponentially (I = exp (-φ^{1/2} S)) as the probe is placed near the sample of a conductive material by a distance of several nm, which process involves measurement of a control voltage with which the positional relation of the probe and the sample is controlled so as to render constant the tunnel current I as the probe is scanned.

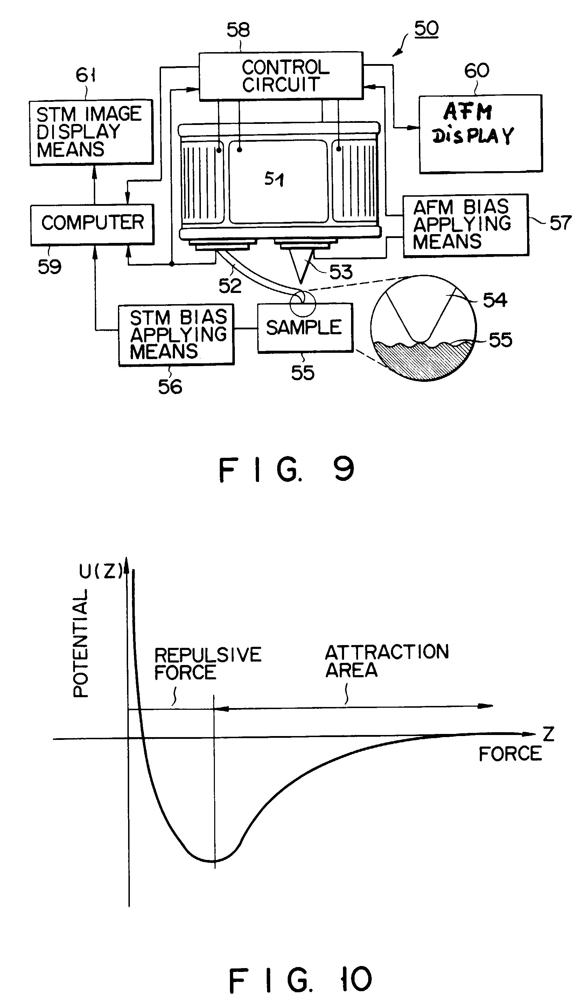

The AFM device is disclosed in USP 4,724,318 (Japan Patent Unexamined Application 62-130302), in which in contrast with said STM device, measurement can be made, independent from the electric conductivity of a sample used, in the resolution on an atomic level by detecting in view of the amount of deflection (the amount of displacement of a probe) of a cantilever (fulcrum) to which the probe is attached a very small force called the interatomic force (repulsive force, van der Waals force, covalent bond force) which has been produced between atoms in the tip of the probe and in the sample surface and measuring a control voltage with which the positional relation between the probe and sample is controlled so as to render the force constant as the probe is being scanned, whereby the configuration of surface of the sample and a distribution image of mutual action can be measured in the resolution on an atomic level. In this connection, the interatomic force can be represented by a Lennard-Jones potential having an attraction and repulsive force areas, as shown in Fig. 10, between the atoms in the top of the probe and in the sample surface.

With said STM device, the distance between the probe and sample, the local charge state density of the sample, and the local potential of the sample are reflected on a tunnel current to be detected. That is, normal STM images include information of microscopic surface roughness of the sample, information of the local charge density of states, and information of local potential distribution in the sample surface. In this connection, there have been recently developed the scanning tunneling spectroscopy (thereafter referred to as STS) and the scanning tunneling potentiometry (thereafter referred to as STP). In STS, a three-dimensional image (STS image) is obtained by steps of separating information of the surface roughness of the sample and information of electronic physical properties in the sample surface from tunnel currents, and extracting information of the electronic state of the sample surface. In STP, a three-dimensional image (STP image) is obtained by extracting information of potential distribution in the sample surface from tunnel current flows. The applicants of this application have already filed U.S. patent application 585,880 (EPC patent application 90118507.4) directed to an apparatus which enables simultaneous obtainment of STS and STP images.

Of late, special attention is devoted to more strict study of the surface physical properties based on measurement of physical information about the sample surfaces.

P.J. Bryant has discussed a system for performing simultaneous measurement of STM and AFM images in the articles, in pages 871 to 875, in the Journal of Microscopy Vol. 152, Pt 3, Dec. 1988.

Fig. 9 shows a measurement system 50 as described in this article. The system has a flexible and resilient cantilever 52 and a metallic probe 53 which are disposed on the lower side of a triaxial piezoelectric drive 51 which can drive in three XYZ directions, with the free end of the probe being positioned in the vicinity of the rear side of the cantilever 52. The free end of the cantilever 52 is formed with an acute tip 54, which is positioned near the surface of a specimen 55. An STM bias applying means 56 and an AFM bias applying means 57 are provided in such a manner that an STM bias voltage V_{S} is applied between the cantilever 52 and the specimen 55 and an AFM bias voltage V_{A} will be applied between the cantilever 52 and the metallic probe 53. Such impressions of the STM bias voltage V_{S} and AFM bias voltage V_{A} give rise to tunnel current flows between the cantilever 52 and specimen 55, and the cantilever 52 and metallic probe 53 respectively. Namely, an electric current i_{AS} flows in the cantilever 52, which is resulting from the addition of a current i_{S} flowing between the cantilever 52 and the specimen 55, and a current i_{A} flowing between the cantilever 52 and the metallic probe 53. The current i_{AS} is fed to a control circuit 58 and a computer 59. In an attempt to keep this current i_{AS} constant' i.e. to keep constant a force acting between the cantilever 52 and the specimen 55, a feedback voltage is applied to the Z-direction piezoelectric member of the triaxial piezoelectric drive 51. Under this condition, by recording a feedback voltage used when the probe 53 and the cantilever 52 are scanned in the XY-directions against the specimen 55 simultaneously, AFM images (roughness images) of the specimen surface are measured in a moment of a force acting between the cantilever 52 and the specimen 55 being rendered constant, and which images are displayed on an AFM image display means 60.

On the other hand, the current i_{AS} fed to the computer 59 is processed by the computer 59 to obtain a current i_{S}, and consequential recording of this current i_{S} in synchronization with scanning signals results in obtainment of STM images of the specimen surface, thereby being displayed on an STM image display means 61.

However, this prior art can only obtain STM and AFM images. It disclosed nothing about obtainment of said STS and STP images after procurement of information of local charge density of states, and local potential distribution.

Also, with said prior applications, there is a description of the simultaneous obtainment of STS and STP images, but nothing set forth about the simultaneous obtainment of AFM images together with the STS and STP images.

One object of the present invention is to provide a scanning probe microscope which is capable of obtaining a first three-dimensional image (STS image) based on information about the local charge density of states in the surface of a sample and a second three-dimensional image (STP image) based on information about the local potential distribution of the sample as well as a third three-dimensional image (AFM image) based on the interatomic force in the sample surface.

The other object of the present invention is to provide a scanning probe microscope which may obtain a local physical information of a sample surface by applying stimulating it with an energy such as current, voltage, light, heat and a magnetic field, while a servo control is accomplished to keep the distance between the sample and probe constant.

This invention can be more fully understood from the following detailed description when taken in conjunction with the accompanying drawings, in which:
Fig. 1 is an explanatory view for illustrating a first embodiment of the present invention;
Fig. 2 is an explanatory view for illustrating a second embodiment of the present invention;
Fig. 3 is a perspective view of a cantilever used in the second embodiment;
Fig. 4 is an explanatory view for illustrating a third embodiment of the present invention;
Figs. 5A and 5B are views showing the variation in a force acting on a probe with respect to the position of a sample and the variation in current flows with respect to the position of the sample respectively;
Fig. 6 is a circuit diagram for explanation of a fourth embodiment of the present invention;
Fig. 7 is a timing chart for the respective signals of the fourth embodiment;
Fig. 8 is a view showing measurement signals in according to the passage of time;
Figs. 9 and 10 are a circuit diagram and line view for explanation of a prior art; and
Fig. 11 is a view for illustrating other embodiments.

The present invention will be described with reference to the embodiments.

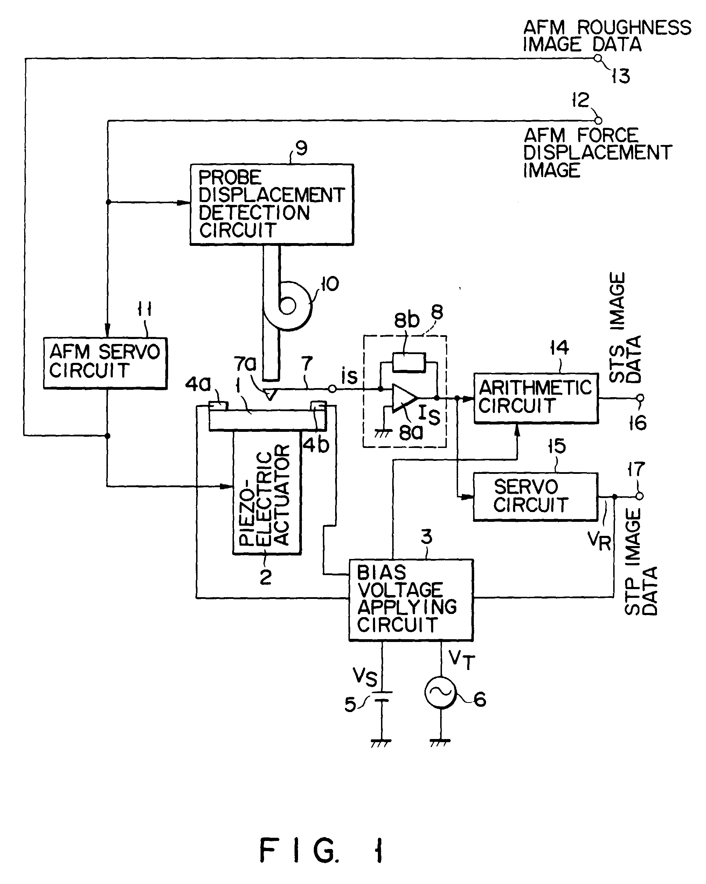

Fig. 1 is a view showing a first embodiment of the present invention. As illustrated, a sample 1 is positioned on a piezoelectric actuator 2 which is fine-movable in the three dimensional direction within a determined range. The sample 1 has electrodes 4a, 4b provided at the opposite ends thereof for applying voltages fed from a bias voltage applying circuit 3. The bias voltage applying circuit 3 is connected with a potential gradient voltage generator 5 for supplying a potential difference V_{S} to the portion of the sample 1 located between the electrodes 4a, 4b and a modulated voltage generator 6 for supplying to the sample 1 a modulated voltage V_{T} having a determined cycle and amplitude and varying with the passage of time. A conductive cantilever 7 is provided extending substantially horizontally above the sample 1 so that a probe 7a provided on a free end of the cantilever 7 at the lower side will come close to the surface of the sample 1. The cantilever 7 is made of a selected material in a selected form so as to be furnished with a determined spring constant and electrically connected to a tunnel current detection circuit 8 for detecting a tunnel current I which will occur between the probe 7a and the sample 1 when the probe 7a is moved close to the sample 1. There is provided a light interference fiber 10 above the cantilever 7 with its free end positioned in opposition to the lower end of the light interference fiber 10 which is connected to a probe displacement detection circuit 9 for detecting displacement in a vertical direction of the cantilever 7. The probe displacement detection circuit 9 is connected to an AFM servo circuit 11 and an AFM force displacement image data output terminal 12, the AFM servo circuit 11 being operative to control the position of the sample 1 via the piezoelectric actuator 2 with reference to the amount of displacement in the vertical direction of the probe 7a. The AFM servo circuit 11 is connected by its output to the piezoelectric actuator 2 and an AFM roughness image data output terminal 13 respectively. On the other hand, said tunnel current detection circuit 8 includes an operational amplifier 8a and a feedback resistor 8b coupled in parallel to the latter, with its output being connected to an arithmetic circuit 14 and a potential servo circuit 15. The arithmetic circuit 14 is intended to produce STS image data by finding a dependency of the detected current I_{S} against the modulated voltage V_{T} (for example, a differential conductance ∂I_{S}/∂V_{T}, ∂logI/∂logV, or ∂²I/∂V²) from a tunnel current I_{S} detected by the tunnel current detection circuit 8 and a modulated voltage V_{T} delivered via the bias voltage applying circuit 3 from the modulated voltage generator 6, and which circuit 14 has an STS image output terminal 16 at its output side. Said potential servo circuit 15 is intended to produce STS image data by finding a voltage V_{R} for shifting a potential applied to the entire sample 1 by the integration of a tunnel current I_{S} detected by the tunnel current detection circuit 8. The circuit 15 has an STP image data output terminal 17 at its output side.

Now, the description will be made of the operation of this embodiment. The operation of the device is the same as the device of the aforementioned prior application by the same applicants except that in the STS and STP operations, the probe servo is accomplished by the AFM servo circuit 11, thus the detailed explanation will be omitted.

First, the original point Z_{O} of displacement of the cantilever 7 is obtained. The original point Z_{O} of displacement is placed at the back side of the cantilever 7 while the sample 1 is positioned away from the probe 7a; the original point Z_{O} can be detected by the light interference fiber 10 and probe displacement detection circuit 9.

The piezoelectric actuator 2 is used to gain the force F = k × Z_{C} exerted on the probe 7a through the amount of displacement Z_{C} of the cantilever 7 in the Z-direction from the original point Z_{O} of displacement at the time when the sample 1 is moved near the probe 7. The amount of displacement of the cantilever 7 to be fed back is identified as Z_{S} in order to keep constant the force F acting between the sample 1 and probe 7a. With reference to the amount of displacement detected by the probe displacement detection circuit 9, the AFM servo circuit 11 impresses a servo voltage V_{Z} on the piezoelectric actuator 2 and controls for feedback so that the amount of displacement of the cantilever 7 (probe 7a) is equal to Z_{S}. The scanning of the sample 1 in X and Y-directions is achieved by impressing a scanning voltage on the X- and Y-direction members of the piezoelectric actuator 2 so as to record an AFM servo voltage signal V_{Z} in synchronization with this scanning voltage, thereby obtaining AFM roughness image data under the constant force, with the result that the data is outputted from the output terminal 13 to display the AFM roughness image on a display means (not shown). Also, by recording data of the amount of displacement from the probe displacement detection circuit 9 in synchronization with the scanning voltage can be obtained AFM force displacement image data representing the variation in intensity of a force acting between the sample 1 and probe 7a via the terminal 12.

During the scanning by the probe 7a, a tunnel current I_{S} flows between the sample 1 and probe 7a. A voltage V_{R} for shifting the potential of the overall sample may be obtained by detecting the tunnel current I_{S} and integrating it by means of the potential servo circuit 15. At this time, the potential servo operation is carried out for changing the shifting voltage V_{R} so that said tunnel current I_{S} becomes zero. The recording of this shifting voltage V_{R} in synchronization with the XY scanning voltage allows the measurement of STP image data in accordance with the potential distribution on the surface of the sample 1, and the resultant data is supplied from the output terminal 17 to a second display means (not shown) in which the STP image is displayed.

Furthermore, since the tunnel current I_{S} varies as the modulated voltage V_{T} varies with the passage of time, this can be applied for obtainment of information concerning a local dependency of voltage. Thus, the tunnel voltage I_{S} and modulated voltage V_{T} are fed to the arithmetic circuit 14 to obtain, for example, a differential conductance (∂I_{S}/∂V_{T}), and a sampling in synchronization with the modulated voltage V_{T} is effected to obtain STS image data in response to the local density state of electric charge in the surface of the sample 1, and the STS data is outputted from the terminal 16 to a third display means (not shown) in which the STS image is displayed.

In the above-described manner, the present embodiment enables obtainment of AFM, STP and STS images on the surface of the sample based on three different information such as the interatomic force acting between the sample and probe, the local potential distribution in the surface of the sample and the local density state of electric charge. Also, a three-dimentional image data of the intensity distribution of the current I_{S} may be obtained. Furthermore, I-V characteristics of the local point may be recorded or reproduced by recording the current I_{S} is synchronization with the bias voltage V_{T}.

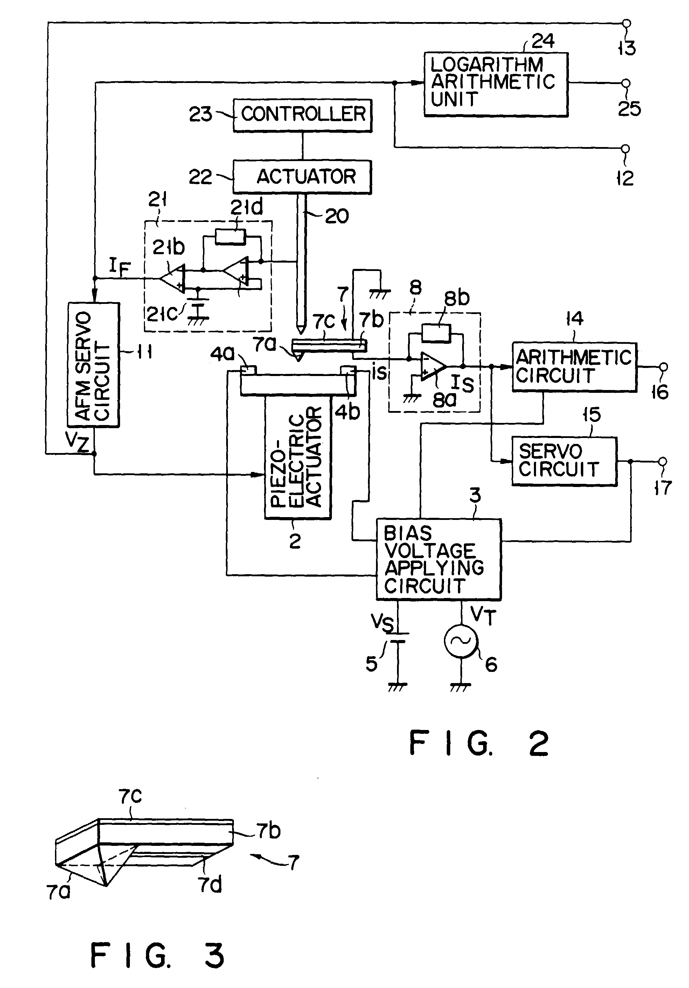

Next, a second embodiment of the present invention will be described with reference to Figs. 2 and 3. The like symbols will be applied to the like members as in Fig. 1 and detailed description thereof will be omitted.

The second embodiment is different from the first embodiment in the STM arrangement that means of detecting the amount of displacement of the cantilever 7 (probe 7a) is utilized for the detection of displacement of the tunnel current flow.

In this embodiment, as illustrated by Fig. 3, the cantilever 7 includes the probe 7a provided on the lower side of the free end of a plate-like electrical insulating lever 7b, a conductive film 7c positioned on the face (top surface) of the lever 7b opposite to the probe 7a, and a conductor wire or strip 7d positioned on the lower side of the lever 7b and electrically connecting the probe 7a to the tunnel current detection circuit 8. Said conductive film 7c is grounded, and the conductive film 7c and the probe 7a are electrically insulated from each other by the insulator 7b. As shown by Fig. 2, a probe displacement detection probe or a tunnel tip 20 is arranged such that the lower end of the tip will come near the conductive film 7c of the cantilever 7. This particular displacement detection probe 20 is connected with a current detector 21 for detecting a tunnel current I_{F} which will flow between the probe 20 and conductive film 7c when a bias voltage V_{F} is applied to the probe 20. The probe 20 is supported at its posterior end by the piezoelectric actuator 22 intended to drive the probe 20 in a Z-direction. The piezoelectric actuator 22 is connected to a controller 23 for controlling the z-directional displacement of the probe 20. Said current detector 21 includes two operational amplifiers 21a, 21b, a bias voltage source 21c, and a feedback resistor 21d, with its output side being connected with an output terminal 25 through the FM servo circuit 11, I_{F} signal output terminal 12, and a logarithm arithmetic unit 24.

The drive signal is applied to the actuator 22 by the controller 23, so that displacement detection probe 20 is now placed at a distance G_{F} from the conductive film 7c short enough to allow the passage of a tunnel current I_{F}. At this time, the interatomic force acts between the sample 1 and probe 7a so as to deflect the cantilever 7, thereby resulting in change of the tunnel current I_{F}.

The AFM servo circuit 11 serves to control the Z-directional position of the sample 1 by the use of the piezoelectric actuator 2 so that the tunnel current I_{F} flowing between the probe 20 held in position and the posterior aspect of the cantilever 7 (conductive film 7c) becomes constant, namely the amount of deflection of the cantilever 7 becomes constant at a determined level. Then, the force acting between the sample 1 and probe 7a becomes constant.

If the servo output signals V_{Z} are put out of the terminal 13 of the AFM servo circuit 11 and recorded concurrently with the XY scanning operation, an AFM image data showing the roughness of the sample surface may be obtained subject to the force being kept constant.

On the other hand, in case the AFM servo circuit 11 has a time constant which is more slow than the cycle of variation in roughness of the surface of the sample 1 in accordance with the X scanning, the servo signals V_{Z} from the AFM servo circuit 11 cannot follow close in the roughness variation, and thus the displacement of the cantilever 7 is incidental to the tunnel current I_{F}. In this connection, if the variation of I_{F} is recorded concurrently with the XY scanning, AFM force displacement image data can be obtained, indicative of varying intensity of a force acting between the sample and the force detection probe.

Since the tunnel current I_{F} depends on a distance G_{F} between the displacement detection probe 20 and conductive film 7c exponentially as is represented by the expression: I_{F} = exp (-Aφ^{1/2} G_{F}), log (I_{F}) may be found using the logarithm arithmetic unit 24 to obtain a signal proportional to the displacement of the cantilever from the output terminal 25.

If this signal is recorded during the XY scanning, the varying amount of a roughness which is finer than the space frequency of roughness of the sample followed by the servocontrol can be detected by a distance-order and formed into an image.

The description of other operations will be omitted as they are the same with the first embodiment.

In this embodiment, can be obtained AFM images, STP images and STS images in the surface of the sample based on three different information of the interatomic force acting between the sample and probe, local distribution of electron in the surface of the sample and the local state of electron. Also, in this embodiment, the principle of the STM is utilized instead of using of an optical fiber, for detecting the displacement of the cantilever. Thus, this device may be effectively used against such a sample that the leakage lights from the optical fiber may influence aforementioned information.

Instead of using a principle of an STM for detection, a displacement detection method utilizing a resonance frequency of a cantilever or a displacement detecting method utilizing a variation of a capacity between a cantilever and a opposite electrode facing the cantilever may be utilized to obtain the same advantage.

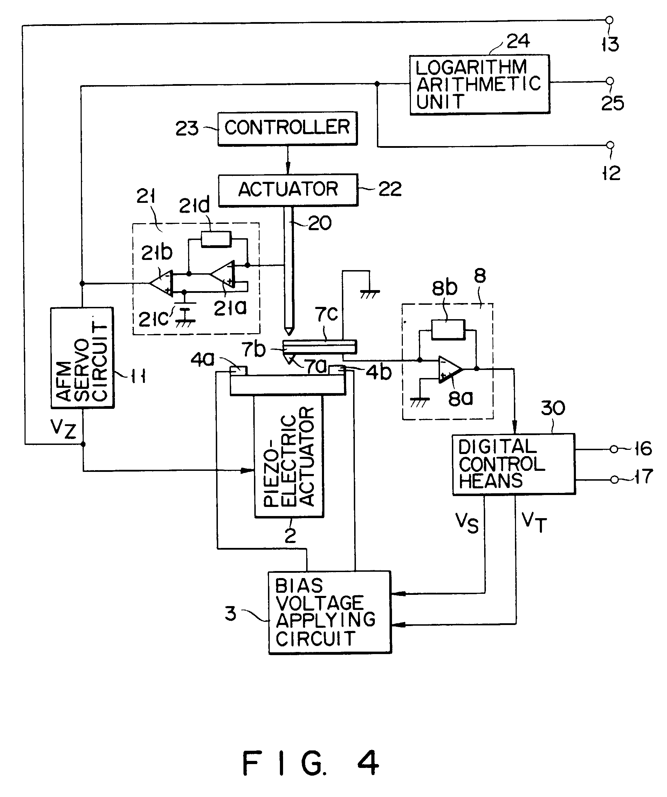

Next, a third embodiment of the present invention will be described with reference to Fig. 4. The like symbols will be applied to the same members as those in Fig. 1, and any detailed description thereof will be omitted.

The third embodiment is different from the second embodiment in that a digital control means 30 is replaced with the arithmetic circuit 14 and servo circuit 15 so that a bias voltage in a digital form may be applied to the sample, that the bias voltage is digitally controlled by the digital control means 30 so as to be impressed on the sample 1, and that the measurement of STS image data and STP image data may be performed by digital computation rather than use any specific circuits. This particular control means 30 is connected at its input to the output of the tunnel current circuit 8 and at its output to the terminals 16, 17 and the input of the bias voltage applying circuit 3 in order to obtain the modulated voltage V_{T} and potential difference V_{S}. Other things are much the same with the first and second embodiments.

The present embodiment also may obtain, as in the first and second embodiments, AFM images, STP images, and STS images in the surface of the sample based on three different information the interatomic force acting between the sample and probe, the local distribution of electron in the surface of the sample, and the local state density of electric charge. In accordance with the instant embodiment, this digital control system makes it possible to provide stable control of bias voltage. Additionally, without use of the particular circuits such as potential servo circuit, differential conductance arithmetic circuit, etc., measurements of STS and STP image data by digital processings, correction by a tunnel resistance value, and various arithmetic processes can be performed.

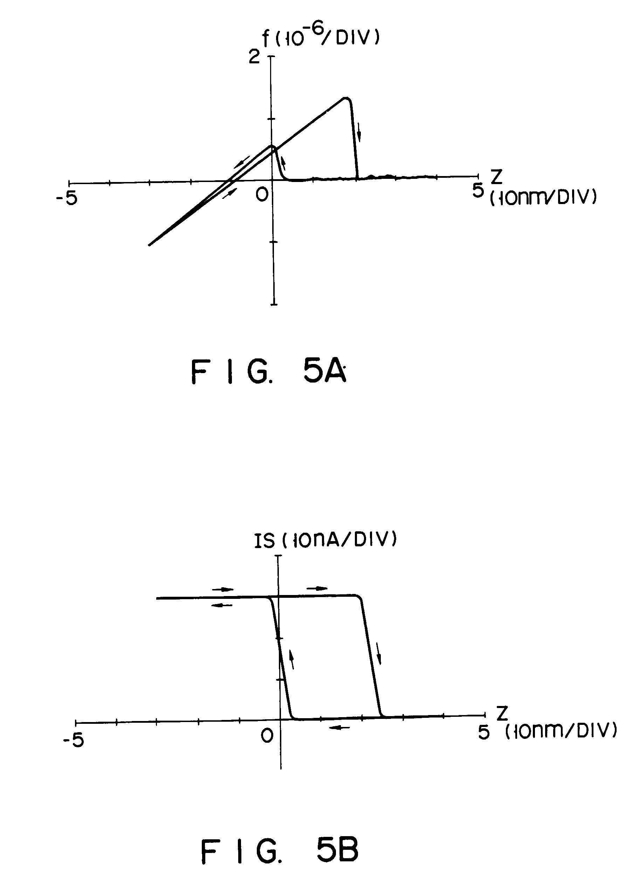

The present invention is not limited to said embodiments, but other variations and modifications may be made. For example, with any of said previous embodiments, 3 three-dimensional data of AFM, STP and STS images can be obtained when the probe is scanned in the XY-directions over the surface of the sample. And besides, additional data of showing the variation of a force (e.g. interatomic force) acting on the probe relative to the sample position as shown in Fig. 5A and further data of showing the variation of a current flow with respect to the sample position as shown in Fig. 5B can be obtained simultaneously.

### Embodiment 4

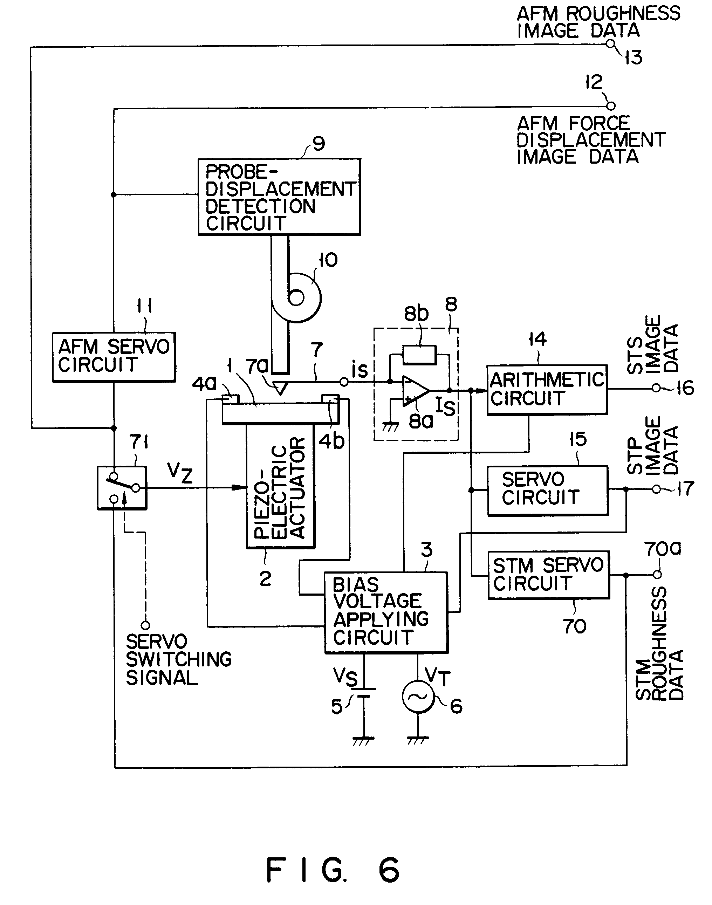

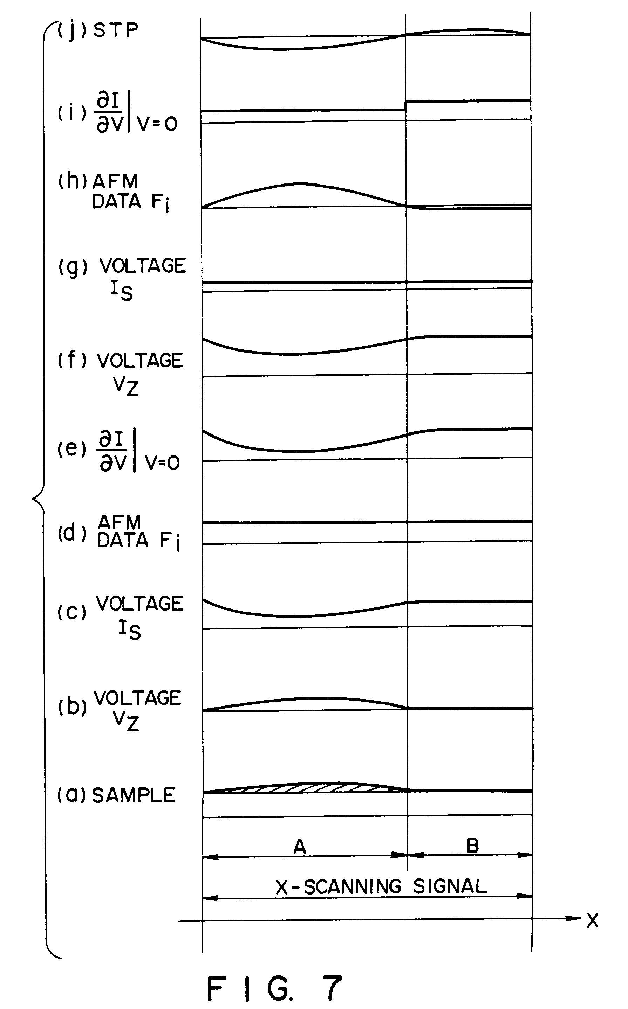

Fig. 6 shows the structure of a fourth embodiment of the instant invention, and Fig. 7 is a corresponding view showing the cross section of the sample to be measured and signals to be obtained, with reference to these views of the figures will be described the contents of the embodiment. The like symbols are applied to the same members as those in Fig. 1, and detailed description will be omitted.

The fourth embodiment is different from said first embodiment in that as shown by Fig. 6, the addition of an STM servo circuit 70 and a servo signal switching unit 71 connected to each other in the following manner permits the switching of a control circuit at a distance between the sample 1 and probe 7 from the AFM servo circuit 11 and STM servo circuit 70.

Referring to the STM servo operations and STS operation using the additional STM servo circuit 70 arranged in Fig. 6, and the STP operation, a probe for detecting the tunnel current is corresponding to the cantilever 7, and the light interference fiber 10 for detecting the displacement of the cantilever 7 and the probe displacement detection circuit 9 are additionally provided. Other matters than the above-described are same as the operations as disclosed in the prior application filed by the present applicant of which the Background portion has described. So, no detailed explanation will be made.

Fig. 7 illustrates the interrelation between a series of data obtained by the present embodiment and the cross section of the sample in the X-direction.

Fig. 7 (a) shows a cross section of the X-direction of the sample within the measured range. A base plate is of metal, the area drawn by slant lines within a region A is oil-smeared areas, and a region B is a relatively clean metallic surface.

(b) to (e) in Fig. 7 show each of signals subjecting AFM to servo-control, and (f) to (i) show each of signals subjecting STM to servo-control. Fig. 7 (j) shows STP information which is not influenced by the servo switching.

When the AFM is servo-controlled, the servo switching unit 71 as shown in Fig. 6 stands for the AFM side, and the output voltage of the AFM servo circuit 11 is applied as V_{Z} to the Z-direction member of the piezoelectric actuator 2. The servo-control of AFM involves maintaining constant a repulsive force acting between the probe 7 and sample 1 so that the piezoelectric actuator tends to shrink more in the Z-direction as the voltage V_{Z} is more increased. Then, the voltage V_{Z} shows a roughness corresponding to the roughness on the surface of the sample as illustrated by Fig. 7 (b). The AFM force displacement image data F_{L} is an output from the probe displacement detection circuit 9, which shows the amount of deflection of the cantilever-beam-structured probe 7. In this instance, the position where no force is applied is identified as zero, and the direction in which the repulsive force is applied is identified as a positive direction. During the servocontrol in the AFM, there is some repulsive force in action with F_{L} having a positive value preset by the AFM servo circuit as in Fig. 7 (d). The current strength I_{S} is a strength of a current flowing between the metallic portion of the sample base plate and the top end of the probe 7. While a substantially constant rate of contact current flow passes in the region B, the interval between the electrodes is extended wider by the smeariness of the slant lined portion in the region A, with the result that the current is hard to flow with its current value I_{S} being smaller than that in the region B.

During the servocontrol in the STM, the servo switching unit 71 shown in Fig. 6 stands for the STM side, the STM servo circuit 70 applies a voltage V_{Z} to the Z-direction element of the piezoelectric actuator 2. The STM servo circuit is adapted to render constant the strength of I_{S} which is the output of tunnel current detection means 8.

In this case, it is necessary to have more reduced voltage V_{Z} in the region A than in the region B in order to extend the piezoelectric actuator 2. The probe 7 will be elevated by the force from the surface of the sample. That is, the voltage V_{Z} behaves to look as if the region A is incurved as in Fig. 7, and draws a plane with fidelity to the roughness of the metallic surface in the region B. On the other hand, as in Fig. 7 (h), the output F_{L} of the probe displacement detection circuit 9 reaches the range of the repulsive force in the region A, and is attracted to the surface in the relatively clean region B within the area of attractive force. The current strength I_{S} becomes equal to a certain value preset by the STM servo circuit as in Fig. 7 (g).

As regards the signal of the STS image data (the one when the bias voltage is zero [∂I_{T}/∂V_{T}|_{VT=0}]) outputted from the differential conductance arithmetic circuit, Fig. 7 (e) shows said signal during the servocontrol of AFM, and Fig. 7 (i) shows said signal during the servocontrol of STM.

The differential conductance suggests that the current flows easily, and is also proportional to the strength of tunnel current.

During the servocontrol with the AFM, the differential conductance tends to have a value substantially corresponding to the contact resistance at the metallic portion of the region B, but at the region A, since each place has a different interval between the metallic portion and the probe, a low value is yielded at a considerably smeared place as shown in Fig. 7 (e).

On the other hand, during the servocontrol in the STM, as shown in Fig. 7 (i), the metallic portion of the sample base plate is at a far distance from the leading end of the probe, and at the metallic portion of the region B, the differential conductance is small as compare with the counterpart during the servocontrol of AFM. Also, because the current is kept constant in strength in the region A unlike in the servocontrol of AFM, a given value of the differential conductance is yielded. In the region A, however, the presence of stains between the probe and the metallic portion renders the current and voltage semiconductive in quality, and thus, the value of the differential conductance when the bias voltage is equal to zero is more small than that in the region B which shows the metallic characteristics.

If a potential gradient is established in the X-direction and the measurement by STM is effected at the same time, potential difference will be reduced substantially to zero by way of the conducting of the metals at right and left hands in the region A, and there is such a potential distribution as shown in Fig. 7 (j) where a potential drop due to the potential concentration in the region A is observed. This provides same information irrespective of the condition of servocontrol.

As above-described, even if measurement is carried out in the same region, different information will result respectively in case of the AFM servo circuit used and in case of the STM servo circuit used, but in the both cases, useful information will be provided by the measurement of the surface conditions of very small areas. However, with the measured area being less than if the measurement is effected by the STM servomechanism after a measurement by the AFM servo, it cannot be determined that the same area has been measured. In this regard, in order to obtain said information with reference to one very small area simultaneously, it maybe conceived that a measurement process comprises impressing an electric signal to a switching signal from the servo switching unit, and alternating measurements by AFM and STM servomechanisms one with another in scanning each line.

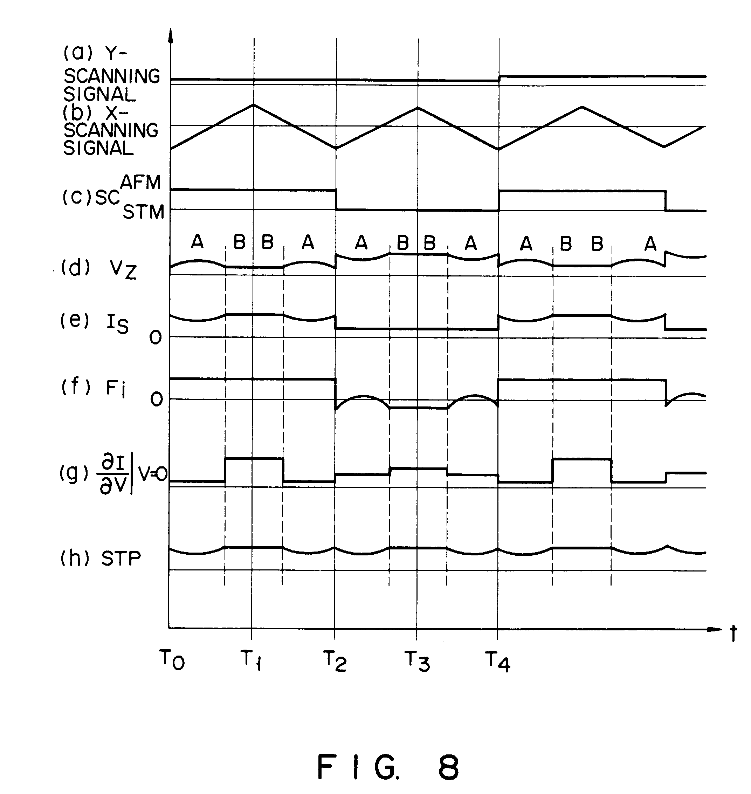

Fig. 8 shows the sequence of such a measurement with the horizontal axis representing a time axis.

Figs. 8 (a) and (b) show Y scan signal and X scan signal produced by a voltage generator which is not shown in Fig. 6. X scan signal is a triangle waveform which repeats waveforms between T_{O} and T_{Z}, and Y scan signal is increased by one step value at a point of T₄ in which the X scan signal has run 2 cycles. That is, each line is scanned twice. The servo switching until 71 here is set to stand for AFM side at a high level and for STM side at a low level. In order to execute measurement by switching from the AFM servocontrol to the STM servocontrol per one X scan, as shown in Fig. 8 (c), a servo switching signal SC is brought to a high level in the position between T_{O} and and T₂, thereby resulting in the AFM servocontrol mode, and the servo switching signal SC is brought to a low level in the position between T₂ and T₄, thereby resulting in the STM servocontrol mode. By repeating the above-described operations between TO and T₄ at each step of the Y scan signal, the measurements by the AFM and STM servocontrols may be made at the same time for the same area.

With respect to the preservation of data, in consideration of the influence of the switching of servocontrol, the respective data (Figs. 8 (d) to (h)) corresponding to those of Figs. 7 (b) to (e) at 128 points between T₁ and T₂ are sampled, and the values of X and Y scan signals are held or displayed as coordinates in the data region at the AFM servocontrol in a data memory or data display unit not shown in Fig. 6. And then, the measurement data (Figs. 7 (d) to (h)) corresponding to those in Figs. 7 (f) to (j) at 128 points between T₃ and T₄ are sampled, and held or displayed in the data region at the STM servocontrol. Said operations are repeatedly performed at the respective steps of Y scan signals in the same manner as in the servo switching so as to hold or display the information within the entire two-dimensional scan region. In Fig. 8 (d) is indicated as symbols A and B region - B region correspondence as shown in Fig. 7, the both regions being scanned then, and Fig. 8 (d) also shows various waveforms of signals which have been impressed on the piezoelectric actuator and which are corresponding to the respective modes and scan points. Fig. 8 (e) shows output amplitudes I_{S} of the current detector 8 at the respective points of time, and Fig. 8 (f) shows AFM force displacement image data F_{L} outputted from the probe displacement detection circuit 9. Fig. 8 (g) shows waveforms of STS image data (∂I/∂V|_{VT=O)} outputted by the differential conductance arithmetic circuit 14 which has sampled the differential conductance when the bias voltage V_{T} is O V. Fig. 8 (h) shows waveforms of STP image data outputted from the potential servo circuit 15. The respective waveforms are such that they are corresponding to the cross sections during the STM and AFM servocontrol.

In accordance with the instant embodiment, the AFM, STS, STP measurement by the STM servocontrol and the AFM, STS, STP measurement by the AFM servocontrol can be done simultaneously with respect to the same region.

Furthermore, the arrangement as shown in Fig. 6 allows the simultaneous measurement not only by switching the servocontrol for each line as in this embodiment but also by performing the servo switching at each scanning.

As described above, in accordance with the present invention, there can be provided a scanning probe microscope wherein a 3-dimensional image (STS image) based on information relative to the local charge density state of the surface of a sample and a three-dimensional image (STP image) based on information relative to the local distribution of potential can be obtained, and a three-dimensional image (AFM image) based on the atomic force on the surface of the sample can also be obtained simultaneously.

Hitherto, a conventional an STM device has been used to determine the bias-dependency of the tunnel current flowing between a sample and the probe of an STM. From the bias-dependency of the tunnel current, we can obtain data representing the electron condition and vibration condition of the sample. The electron condition corresponds to the electron density and the primary differential spectrum of the tunnel current. The vibration condition corresponds to the secondary differential spectrum and the phonon spectrum.

In the conventional STM device, a constant bias voltage is applied to the sample, thus generating a tunnel current flowing between the probe and the sample. The STM probe is moved in the Z direction, while scanning the X-Y plane, such that the tunnel current remains constant.

When the STM probe reaches a sampling point where the bias-dependency of the tunnel current is to be measured, the X- and Y-direction motion of the probe is stopped, thus terminating the scanning of the X-Y plane. The Z-direction mode is then stopped, thereby fixing the probe at the sampling point. In this condition, the bias voltage is swept, whereby the bias-dependency of the tunnel current is measured.

The reason why the Z-direction motion of the STM probe is stopped will be described. Where the probe is moved in the Z direction in accordance with the tunnel current, the its position should change as the bias voltage applied to the sample is swept, since the tunnel current varies with the bias voltage. Consequently, it would be no longer possible to measure the bias-dependency. Therefore, it is necessary to hold the probe at a fixed position throughout the measuring of the bias-dependency of the tunnel current.

With the conventional STM device, wherein the probe is moved in the Z direction in accordance with the tunnel current, it is necessary to stop the control of the position of the probe in order to measure the bias-dependency of the tunnel current. Here arises a problem. While the position of the probe is not controlled, it is extremely difficult to locate the probe at the same distance from the sample, because of the vibration externally applied to the STM device and/or the temperature drift of the mechanical system of the STM device. The inevitable changes in the distance between the probe and the sample, if caused by the vibration, often results in changes in the tunnel current. Consequently, it is difficult to measure the bias-dependency of the tunnel current with high accuracy.

Before description is made of other embodiments of the invention, i.e., AFM-STMs, the principle of the invention will be explained.

The physical quantity, which is to be detected at a specified position on the surface of the sample, varies due to any stimulus externally applied to the sample. Hence, the physical quantity can be detected quantitatively from the influence the stimulus imposes on the sample.

The external stimulus is, for example, a bias voltage, a light beam, a magnetic field, a potential change, heat, an electrochemical modulation, a chemical modification, a biochemical modification, or a local interaction.
a) A bias voltage is applied, as stimulus, to the sample. This voltage is modulated, thereby recording how the tunnel current depends on the bias voltage. Based on the dependency of the current on the bias voltage, the primary and secondary differential spectra of the tunnel current are determined. The electron density is detected from the primary differential spectrum, and the band gap is determined from the electron density. Further, the vibration condition (non-elastic scattering) is detected from the primary differential spectrum, and the phonon spectrum is obtained from the vibration condition. Finally, the electric switching attenuation in a limited portion of the sample is determined.
b) A light beam is applied, as stimulus, to the sample, whereby the tunnel current is generated from the light beam, and the photoconductivity and the electron density of the sample change. The tunnel current is measured, thereby determining both the photoconductivity and the electron density.
c) A magnetic field is applied, as stimulus, to the sample, whereby the tunnel current flowing between the probe and the sample changes, and the intensity of light emitted from the sample changes. From the changes in the tunnel current, the vertical relaxation and horizontal relaxation of the spin (i.e., electron spin or nucleus spin) are detected. From the changes in the light intensity, the hysteresis curve (a combination of an MFM and a STM) for a specified portion of the sample is obtained.
d) A potential of the sample is changed, thus stimulating the sample. The STP is measured, thereby determining the effect the magnetic field imposes on the emission of light from the sample.
e) Heat is applied, as stimulus, to the sample, whereby a tunnel current is generated and flows between the probe and the sample. From this current, the surface-temperature distribution of the sample, the heat history defined by the local magnetic field, the local thermal deforming of the sample, and the like are determined by means of an AFM heat profiler.
f) An electrochemical modulation is applied, as stimulus, to the sample, electrically corroding the sample. The degree of the electric corrosion is evaluated, thereby determining the ion current flowing through the sample.
g) A chemical modification is applied to the sample, causing a catalytic reaction in the sample. The degree of this reaction is measured.
h) In the case where a biochemical modification (e.g., an immunological one) is applied to the sample, the distribution of the anti-immunoglobulin in the sample changes. This change in the anti-immunoglobulin is detected by applying an anti-immunoglobulin antibody modified by metal colloid, instead of a anti-immunoglobulin antibody modified by a radioisotope, which is used in radioimmunoassay.
i) A local interaction (e.g., dipole-dipole interaction, charged-transfer (CT) interaction, or Van der Waals interaction) is performed in the sample. If the magnetic dipole located at the tip of the probe and the magnetic dipole mounted on the sample interact, the relationship between the magnitude of the interaction and the tunnel current flowing between the probe and the sample is determined. If the molecules located at the tip of the probe and the those mounted on the sample interact, the relationship between the magnitude of the CT interaction and the tunnel current is determined.

The physical quantity, which is to be detected at a specified position on the surface of the sample, also varies as the sample is moved. In other words, the quantity changes in accordance with the position of the sample. The sample is moved from one position to another, while no stimuli are externally applied to the it, thus changing the physical quantity. The changes in the physical quantity is measured.

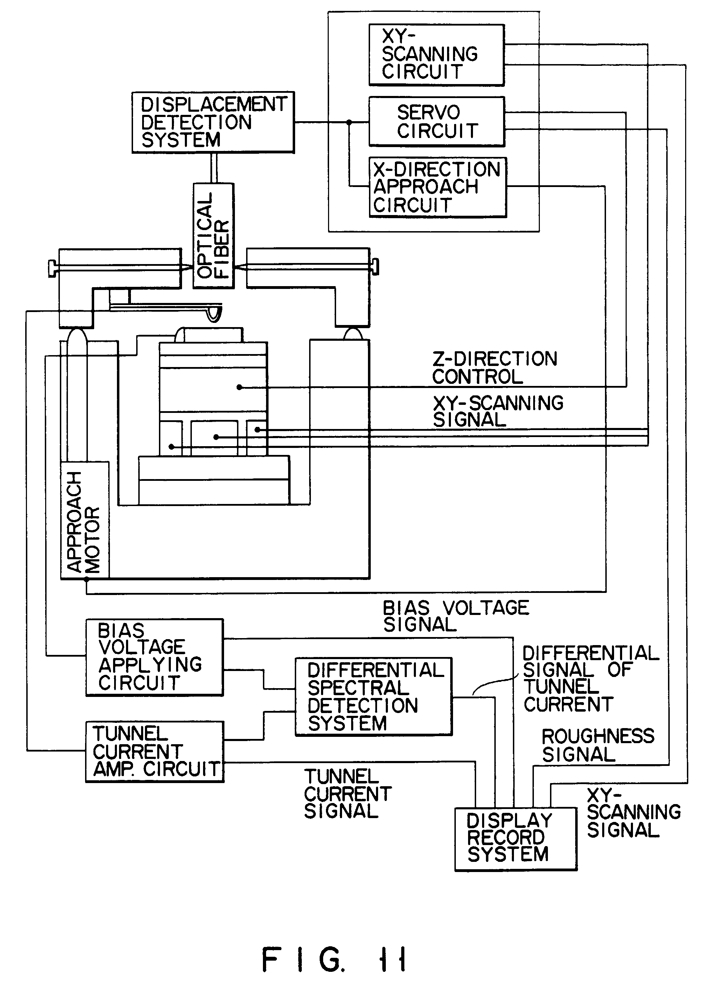

AFM-STM,s according to the other embodiments of the invention, which are incorporated in an AFM system, will now be described, which may be accomplished by a device shown in Fig. 11. As is shown in Fig. 11, the AFM system comprises a sample stage unit, a displacement detection system, a control system, and the AFM-STM of the invention.

### Embodiment 5

The sample stage unit includes a piezoelectric actuator, a sample table, and a coarse drive mechanism. The piezoelectric actuator has a piezoelectric element for moving a sample in Z direction minutely while the probe is being moved in X-Y plane. The sample table is designed to hold the sample attached to the actuator. The table can be made of metal. If so, the sample is attached to the fine actuator by means of an insulator. The coarse drive mechanism is designed to move the sample coarsely in the Z direction toward the probe. This mechanism can have an XY stage for moving the sample table and, hence, the sample, in the XY plane.

The displacement detection system has a cantilever, a sensor unit, and a three-dimensional position controller. The cantilever is made of electrically conductive material and has a predetermined spring constant. It opposes the sample mounted on the sample table. The probe protrudes downwards from the free end of the cantilever, and located very close to the sample in order to detect the inter-atomic force (Van der Waals force) exerted between the probe and the sample. The sensor unit located above the free end of the cantilever, having an optical fiber, and designed to detect the displacement of the cantilever. The optical fiber can be replaced by an interferometer. (The upper surface of the free end of the cantilever must be mirror-polished.) The three-dimensional position controller is designed to move the sensor unit in the X, Y and Z directions, thereby to place the focal point of the sensor unit at the free end. The displacement detection system is removably held on the sample table, at three points, by means of elastic members.

The control system comprises a first drive circuit, a servo circuit, a signal generating circuit, and a second drive circuit. The first drive circuit is used for driving the piezoelectric actuator in the XY plane. The servo circuit is designed to move the piezoelectric actuator in the Z direction in accordance with the displacement of the cantilever which the sensor unit has detected. The signal generating circuit is adapted to drive signals. The second drive circuit is designed to drive the coarse drive mechanism in accordance with the signals output by the signal generating circuit, thereby to move the sample in the X, Y and Z directions.

As is shown in Fig. 11, the AFM-STM comprises a bias-voltage applying circuit, a tunnel current detecting section, a differential spectrum detecting section, a display/record system.

The bias-voltage applying circuit has a sample electrode and a bias voltage source. The sample electrode is bonded to the sample with electrically conductive adhesive. A bias voltage is applied to the sample electrode from the bias voltage source which is able to perform voltage sweep.

The tunnel current detecting section comprises an electrode and an amplifier circuit. The electrode projects from the probe, for detecting the tunnel current flowing between the probe attached to free end of the cantilever and the sample to which a bias voltage is applied from bias-voltage applying circuit. More precisely, the electrode is bonded to the fixed end of the cantilever (made of zirconium by means of silicon process) with electrically conductive adhesive. This electrode is connected to the amplifier circuit by means of a lead line. The amplifier circuit is used to convert the tunnel current supplied from the electrode into a voltage and also to amplify this voltage.

The differential spectrum detecting section has either an analog circuit or a digital circuit for a differential signal representing the tunnel current, i.e., the output of the tunnel current detecting section. This section can detects the differential spectrum of the tunnel current by one of the following three alternative methods:

### Method 1

The high-frequency component of the tunnel current is superposed on the bias voltage. Then, the primary high-frequency component ω (primary differential component) and secondary high-frequency component 2ω (secondary differential component) are detected by means of a locked-in amplifier, thereby to obtain the data representing the electron density and the non-elastic scattering of electrons (namely, phonon spectrum).

### Method 2

The so-called analog STS process is used, thereby to obtain the data representing the electron density and the non-elastic scattering of electrons (i.e., phonon spectrum).

### Method 3

The so-called CITS process is applied, wherein an A/D converter converts the tunnel current to digital data, and a computer processes the digital data and provides the data representing the electron density and the non-elastic scattering of electrons (i.e., phonon spectrum).

The display/record system has means for displaying and recording the bias-dependency of the tunnel current and the differential spectrum thereof.

In the AFM-STM described above, the position of the sample is controlled with respect the Z direction in accordance with the inter-atomic force which is generated by the interaction between the probe and the sample and which does not depend on the bias voltage applied to the sample. As a result of this, the distance between the probe and the sample remains unchanged. Hence, the AFM-STM can measure the bias-dependency of the tunnel current (or the differential spectrum) with high accuracy.

It will now be explained how the AFM-STM (Fig. 11) according to the invention operate to measure a physical quantity such as the gap of a superconductive substance, the band gap of a semiconductor body, or the phonon structure of a low-order substance.

First, The displacement detection system is removed from the sample stage unit. Next, a sample is fixed on the sample table which is mounted on the sample stage unit. The sample electrode for applying a bias voltage to the sample is bonded to the sample with adhesive which is electrically conductive.

Then, the displacement detection system is held on the sample stage, and is mechanical connected thereto by means of elastic members. At this time, the probe is spaced apart from the sample by so long a distance that the Van der Waals interaction between the probe and the sample is negligibly weak.

Next, the optical sensor detects the displacement of the free end of the cantilever. A signal representing this displacement is supplied to the servo circuit. In response to the signal, the servo circuit controls the piezoelectric actuator. The sample is thereby moved in the Z direction, toward the probe, thus reducing the distance between the sample and the probe, so that an Van der Waals interaction may occur between the probe and the sample is initiated. However, the sample is still spaced sufficiently from the probe, and no Van der Waals interaction is initiated between the probe and the sample.

The sample stage is moved upwards and hence toward the probe by means of the approach motor (i.e., a stepper motor) incorporated in the coarse drive mechanism. Meanwhile, the optical sensor is monitoring the magnitude of the probe-sample interaction. When the magnitude of the interaction reaches a predetermined value, or when the distance between the probe and the sample decreases to 1 nm, the approach motor is stopped, whereby the sample is no longer moved toward the probe.

Further, the bias-voltage applying circuit applies a bias voltage to the sample through the sample electrode, while the sample is being moved in the Z direction such that the inter-atomic force acting between the probe and the sample remains constant. As a result of this, a tunnel current flows from the sample to the probe. The probe detects the tunnel current. The current is supplied to the amplifier circuit and amplified into a tunnel-current signal. This signal is input to the display/record system, which displays and records the tunnel current.

In the meantime, the bias voltage is swept, thereby detecting how the tunnel current changes with the bias voltage. In other words, the bias-dependency of the tunnel current is detected. The data representing the bias-dependency is supplied to the display/record system. The tunnel-current signal is supplied to the differential spectrum detecting section, which detects the primary and secondary differential spectra of the tunnel current.

As as been pointed out, the inter-atomic force does not depend on the bias voltage at all. Hence, the distance between the probe and the sample remains unchanged, despite of the sweeping of the bias voltage applied to the sample. That is, the bias-dependency of the tunnel current can be measured, not affected by the vibration externally applied to the STM device or the temperature drift of the mechanical system of the STM device.

Next, the position of the sample is continuously controlled with respect to the Z direction, whereby the sample is held at a substantially constant distance from the probe, while the sample is moved in the X-Y plane. As a result, the AFM-STM measures the bias-dependency of the tunnel current or determines the differential spectra thereof at any point on the surface of the sample. The bias-dependency thus measured, or the differential spectra thus determined are displayed and recorded by means of the display/record system,

### Embodiment 6

An AFM-STM according to a second embodiment of the invention for use in an AFM system of the same type as shown in Fig. 11, will now be described. The second embodiment is identical to the first embodiment shown in Fig. 11, except that it has an additional component, i.e., a light-applying section for applying light to a sample. The light-applying section comprises a light source, a spectroscopic unit, and a light-converging unit. The light source emits light. The spectroscopic unit splits the light into beams. The light-converging unit converges one of the light beams at the surface of the sample. Owing to the use of the light-applying section, the bias-dependency and wavelength-dependency of a light-excited current can be observed.

If the inter-atomic force between the probe and the sample (e.g., a sample forming a light-emitting diode) is not influenced by the light, the current flowing between the probe and the sample is detected, while controlling the position of the sample in the Z direction and thereby maintaining the inter-atomic force at a constant value. In this condition, the light source is turned on and off, successfully measuring the light-excited current with high accuracy. That is: light-excited current = (current flowing when the sample is irradiated) - (current flowing when the sample is not irradiated).

The bias-dependency of the light-excited current and the differential spectrum thereof is measured by sweeping the bias voltage applied to the sample while applying light having a specific wavelength to the sample.

The wavelength-dependency of the light-excited current is measured by sweeping the wavelength of the light applied to the sample while maintaining the bias voltage at a constant value, and then detecting how the light-excited current changes.

Still further, the distribution of the photoconductivity on the surface of the sample can be determined by X-Y scanning the sample while the position of the probe is being controlled with respect to the Z direction in accordance with the inter-atomic force acting between the probe and the sample. The photoconductivity distribution, thus determined, well serves to determine the composition distribution of the surface region of the sample.

In the second embodiment described above, the inter-atomic force acting between the probe and the sample is used to control the distance between the probe and the sample. Hence, the distance between the probe and the sample can be reliably and correctly controlled even if no light is applied to the sample and the sample is made of insulative material or has a surface region made of both insulative material and conductive material.

GaAs, for example, has a resistivity of 10⁸ Ωcm, and no tunnel current can flow between the probe and a sample made of GaAs. Nevertheless, a light-excited current was detected when a He-Ne laser beam having a wavelength of 0.6328 µm was applied to a GaAs sample, while applying AFM servo to the GaAs sample and moving the probe in the X-Y plane. From the light-excited current, the impurity (acceptor) concentration in the GaAs sample can be analyzed. In addition, the lifetime of the excessive carriers in the GaAs sample can be measured by applying laser-beam pulses to the GaAs sample.

### Embodiment 7

An AFM-STM according to a third embodiment of the invention for use in an AFM system of the same type as shown in Fig. 11, will now be described. The third embodiment is identical to the first embodiment shown in Fig. 11, except that it has two additional components, i.e., a cooling unit and a heating unit. The cooling unit holds a sample at low temperatures (e.g., the temperature of liquid helium or liquid nitrogen). The heating unit applies heat pulses to the sample held at the low temperatures, thereby generating a heat-excited tunnel current which flows between the probe and the sample.

The following method is employed in order to measure the energy level and concentration of the impurity which is contained in a semiconductor sample made of silicon, and which traps electrons or holes.

At room temperature, the electrons, even if once trapped, are heat-excited in the conduction band and render the sample electrically conductive. At low temperatures, however, the trapped electrons can no longer serve to render the sample electrically conductive. In other words, a very little tunnel current flows between the probe and the silicon sample at low temperatures. In this condition, a current is supplied to the miniature heater attached to the sample, thereby applying heat pulses to that portion of the sample which contacts the heater and, hence, raising the temperature of the sample. As a result, the electrons trapped in the impurity are heat-excited, and are released from the traps.

With the AFM-STM according to a third embodiment it is possible to detect a heat-excited tunnel current of about 10 pA by detecting the tunnel current flowing between the probe and the sample, while maintaining the probe-to-sample distance at a constant value by means of AFM servo.

### Embodiment 8

An AFM heat profiler, which is a fourth embodiment of the invention and designed for use in an AFM system of the same type as shown in Fig. 11, will now be described. The AFM heat profiler is identical to the first embodiment of Fig. 11, except that a thermocouple is formed on the tip of the probe.

In the first embodiment (Fig. 11), as has been been described, the probe is attached to the free end of the cantilever in order to detect the inter-atomic force and the tunnel current at the same time. In the AFM heat profiler, the thermocouple is formed on the tip of the probe. Therefore, the AFM heat profiler can measure the surface temperature of any portion of a sample, while the probe-to-sample distance is kept unchanged.

More specifically, a nickel layer is coated on the tip of the tungsten probe, thus forming a thermocouple. The probe having the thermocouple is moved in the X-Y plane while applying AFM servo to a sample, thereby detecting the temperature distribution on the surface of the sample. From the temperature distribution, thus detected, the composition distribution of the sample can determined. Since the AFM servo, not STM servo, is applied to the sample to detect the temperature distribution, the surface temperature of the sample will not rise when the tunnel current flows between the probe and the sample. This results in high-accuracy detection of surface-temperature distribution.

### Embodiment 9

An AFM-STM according to a fifth embodiment of the invention, designed for use in an AFM system of the same type as shown in Fig. 11, will now be described. The fifth embodiment is identical to the first embodiment (Fig. 11), except that it is designed to detect globulin antibody existing, in an extremely small amount, on the surface of a sample.

More specifically, an immunoglobulin antibody is modified with an anti-immunoglobulin antibody (e.g., anti-IgA antibody, anti-IgD antibody, anti-IgG antibody, anti-IgE antibody, anti-IgM antibody) to which metal colloid (particle size: about 15 nm) is bonded, thereby causing antigen-antibody reaction so that the globulin antibody is detected. Since the antigen-antibody reaction is a non-covalent bond achieved by Van der Waals force or electrostatic force, the strength of the antigen-antibody bond can be evaluated by means of AFM-mode measuring.

## Claims

1. A scanning probe microscope comprising:
a cantilever (7) including a conductive probe (7a) having a tip portion positioned in front of the surface of a sample to be analyzed,
means (2) for relatively conveying the sample and the probe,
means (3, 5, 6) for applying a bias voltage between said probe and sample to produce a tunnel current therebetween,
means (8) for detecting the produced tunnel current,
probe displacement detecting means (9, 10) for detecting the amount of displacement of the probe resultant from interatomic forces acting between atomics of the tip portion of said probe and of the surface of the sample, and for producing signals as a function of said displacement independent of the tunnel current,
servocontrol means (11) for controlling said conveyor means (2) based on feedback in response to the output signals from the probe displacement detection means (9,10) to retain constant the distance between the tip portion of the probe and sample, thereby causing said conveyor means (2) to relatively convey the sample and probe,
STS image data generating means (14, 16, 30) for forming a first three-dimensional image (STS image, STS:= scanning tunneling spectroscopy) data of information relative to the local electron state in the surface of the sample which information has been obtained from the tunnel current detected by said tunnel current detection means,
STP image data generating means (15, 17, 30, 70, 70a, 71) for forming a second three-dimensional image (STP image, STP:= scanning tunneling potentiometry) data of information relative to the potential distribution in the surface of the sample, which information has been obtained from the tunnel current detected by said tunnel current detection means, and
AFM image data generating means (11, 13) for forming a third three-dimensional image (AFM image, AFM:= atomic force microscope) data of information about the roughness of the sample surface corresponding to the amount of displacement of the probe detected by said probe displacement detection means, so that said STS, STP and AFM images can be obtained.

2. A scanning probe microscope as defined in claim 1, characterized in that said bias voltage applying means (3, 5, 6) includes a modulated voltage generator means for applying between the probe and sample a modulated voltage having a determined cycle and amplitude as a bias voltage, and said STS image data forming means includes arithmetic means (14) for outputting differential conductances of the tunnel current detected by said tunnel current detection means and said modulated voltage.

3. A scanning probe microscope as defined in claim 2, characterized in that said STP image data forming means includes a potential servo means (15) for producing a voltage adapted to shift the potential of the bias voltage applied to the sample by integrating the tunnel current detected by said tunnel current flow detection means.

4. A scanning probe microscope according to claim 1, characterized in that said cantilever has a first side on which said probe is mounted, a second side, and a conductive film (7c) attached to the second side,
said probe displacement detection means comprises a tunnel tip (2) provided near the conductive film of said cantilever,
an auxiliary bias voltage applying means (21c) for applying a bias voltage between the tunnel tip and the conductive film to produce a tunnel current flow between the same members, and
an auxiliary tunnel current detection means (21) for detecting the tunnel current flow produced by the bias voltage applied by said auxiliary bias voltage impression means, so that the amount of said probe may be detected in accordance with the tunnel current detected by the auxiliary tunnel current detection means (21).

5. A scanning probe microscope as defined in claim 4, characterized in that said cantilever includes a plate-like electrically insulated member (7b) having one plane and another plane, a conductive member for connection of said probe and said auxiliary tunnel current detection means, said probe is provided on this one plane and said conductive film is provided on the other plane, and means for connecting said conductive film to earth.

6. A scanning probe microscope as defined in claim 5, which comprises a logarithm arithmetic means (24) for finding the tunnel current flow detected by said auxiliary tunnel current detection means and the distance between the tunnel tip and conductive film exponentially to produce a signal proportional to the displacement of the cantilever.

7. A scanning probe microscope as defined in claim 1, characterized in that said STS image data forming means and STP image data forming means are constituted by an arithmetic means (30) for performing a digital arithmetic process on the tunnel current detected by the tunnel current detection means to produce STS and STP image data.

8. A scanning probe microscope as defined in claim 1, characterized in that it comprises an auxiliary servo control means (70) for providing said conveyor means for feedback in response to the tunnel current detected by said tunnel current detection means so as to retain constant the distance between the probe and sample, thereby causing said conveyor means to convey the sample, and a connection switching means (71) for executing selective connections of the auxiliary servo control means (70) and said servo control means (11) with said conveyor means.

## Patentansprüche

1. Rastertunnelmikroskop mit:
einem Ausleger (7), welcher eine leitende Sonde (7a) mit einer Spitze aufweist, welche vor die Oberfläche einer zu analysierenden Probe positioniert wird,
einer Einrichtung (2) zum relativen Befördern der Probe und der Sonde,
einer Einrichtung (3, 5, 6) zum Anlegen einer Vorspannung an die Sonde und die Probe, um dazwischen einen Tunnelstrom zu erzeugen,
einer Einrichtung (8) zum Erfassen des erzeugten Tunnelstroms,
einer Sondenverschiebungserfassungseinrichtung (9, 10) zum Erfassen des Betrags der Verschiebung der Sonde, die aus interatomaren Kräften resultiert, welche zwischen Atomen der Spitze der Sonde und der Oberfläche der Probe auftreten, und zum Erzeugen von Signalen als Funktion der Verschiebung unabhängig von dem Tunnelstrom,
einer Servosteuerungseinrichtung (11) zum Steuern der Beförderungseinrichtung (2) auf der Grundlage einer Rückkopplung im Ansprechen auf die Ausgangssignale von der Sondenverschiebungserfassungseinrichtung (9, 10), um die Entfernung zwischen der Spitze der Sonde und der Probe konstant zu halten, wodurch die Beförderungseinrichtung (2) veranlaßt wird, die Probe und die Sonde relativ zu befördern,
einer STS-Bilddatenerzeugungseinrichtung (14, 16, 30) zum Bilden von ersten dreidimensionalen Bilddaten (STS-Bild, STS:= scanning tunneling spectroscopy) von Informationen bezüglich des lokalen Elektronenzustands in der Oberfläche der Probe, wobei die Informationen aus dem von der Tunnelstromerfassungseinrichtung erfaßten Tunnelstrom erlangt werden,
einer STP-Bilddatenerzeugungseinrichtung (15, 17, 30, 70, 70a, 71) zum Bilden von zweiten dreidimensionalen Bilddaten (STP-Bild, STP:= scanning tunneling potentiometry) von Informationen bezüglich der Potentialverteilung in der Oberfläche der Probe, wobei die Informationen aus dem von der Tunnelstromerfassungseinrichtung erfaßten Tunnelstrom erlangt werden, und
einer AFM-Bilddatenerzeugungseinrichtung (11, 13) zum Bilden von dritten dreidimensionalen Bilddaten (AFM-Bild, AFM:= atomic force miroscope) von Informationen bezüglich der Rauheit der Probenoberfläche entsprechend dem Betrag der von der Sondenverschiebungserfassungseinrichtung erfaßten Verschiebung der Probe, so daß STS-, STP- und AFM-Bilder erlangt werden können.

2. Rastertunnelmikroskop nach Anspruch 1, dadurch gekennzeichnet, daß die Einrichtung (3, 5, 6) zum Anlegen einer Vorspannung eine Modulationsspannungsgeneratoreinrichtung zum Anlegen einer modulierten Spannung, welche einen bestimmten Zyklus und Amplitude besitzt, als Vorspannung an die Sonde und die Probe und die STS-Bilddatenerzeugungseinrichtung eine Arithmetikeinrichtung (14) zum Ausgeben von differentiellen Leitwerten des von der Tunnelstromerfassungseinrichtung erfaßten Tunnelstroms und der modulierten Spannung enthält.

3. Rastertunnelmikroskop nach Anspruch 2, dadurch gekennzeichnet, daß die STP-Bilddatenerzeugungseinrichtung eine Potentialservoeinrichtung (15) enthält zum Erzeugen einer Spannung, die angepaßt ist, das Potential der an die Probe angelegten Vorspannung zu verschieben, durch Integrieren des von der Tunnelstromflußerfassungseinrichtung erfaßten Tunnelstroms.

4. Rastertunnelmikroskop nach Anspruch 1, dadurch gekennzeichnet, daß der Ausleger eine erste Seite, auf welcher die Sonde angebracht ist, eine zweite Seite und eine leitende Schicht (7c) aufweist, welche an der zweiten Seite befestigt ist,
die Sondenverschiebungserfassungseinrichtung eine Tunnelspitze (2) aufweist, welche nahe der leitenden Schicht des Auslegers vorgesehen ist,
eine Hilfsvorspannungsanlegeeinrichtung (21c) zum Anlegen einer Vorspannung an die Tunnelspitze und die leitende Schicht, um einen Tunnelstromfluß zwischen diesen Teilen zu erzeugen, und
eine Hilfstunnelstromerfassungseinrichtung (21) zum Erfassen des durch die Vorspannung erzeugten Tunnelstromflusses vorgesehen ist, welche von der Hilfsvorspannungseinprägeeinrichtung angelegt worden ist, so daß der Betrag der Probe entsprechend dem von der Hilfstunnelstromerfassungseinrichtung (21) erfaßten Tunnelstrom erfaßt werden kann.

5. Rastertunnelmikroskop nach Anspruch 4, dadurch gekennzeichnet, daß der Ausleger ein plattenförmiges elektrisch isoliertes Teil (7b) mit einer Ebene und einer anderen Ebene, ein leitendes Teil zum Verbinden der Sonde und der Hilfstunnelstromerfassungseinrichtung, wobei die Sonde auf der einen Ebene und die leitenden Schicht auf der anderen Ebene vorgesehen sind, und Mittel zum Verbinden der leitenden Schicht mit Masse enthält.

6. Rastertunnelmikroskop nach Anspruch 5, gekennzeichnet durch eine logarithmische Arithmetikeinrichtung (24) zum Finden des von der Hilfstunnelstromerfassungseinrichtung erfaßten Tunnelstromflusses und des Abstands zwischen der Tunnelspitze und der leitenden Schicht exponentiell, um ein Signal proportional zu der Verschiebung des Auslegers zu erzeugen.

7. Rastertunnelmikroskop nach Anspruch 1, dadurch gekennzeichnet, daß die STS-Bilddatenerzeugungseinrichtung und die STP-Bilddatenerzeugungseinrichtung von einer Arithmetikeinrichtung (30) zum Durchführen eines digitalen arithmetischen Verfahrens bezüglich des von der Tunnelstromerfassungseinrichtung erfaßten Tunnelstroms zur Erzeugung von STS- und STP-Bilddaten gebildet sind.

8. Rastertunnelmikroskop nach Anspruch 1, gekennzeichnet durch eine Hilfsservosteuereinrichtung (70) zum Bereitstellen der Beförderungseinrichtung zum Rückkoppeln im Ansprechen auf den von der Tunnelstromerfassungseinrichtung erfaßten Tunnelstrom, um den Abstand zwischen der Sonde und der Probe konstant zu halten, wodurch die Beförderungseinrichtung zum Befördern der Probe veranlaßt wird, und eine Verbindungsschalteinrichtung (71) zum Ausführen von selektiven Verbindungen der Hilfsservosteuereinrichtung (70) und der Servosteuereinrichtung (11) mit der Beförderungseinrichtung.

## Revendications

1. Microscope à effet tunnel comportant :
un encorbellement (7) comportant une sonde conductrice (7a) présentant une partie de pointe positionnée devant la surface d'un échantillon à analyser,
un moyen (2) pour déplacer relativement l'échantillon et la sonde,
un moyen (3, 5, 6) pour appliquer une tension de polarisation entre ladite sonde et ledit échantillon pour produire un courant tunnel entre eux,
un moyen (8) pour détecter le courant tunnel produit,
un moyen de détection du décalage de l'échantillon (9, 10) pour détecter la distance du décalage de la sonde résultant de forces interatomaires agissant entre atomaires de la partie de pointe de ladite sonde et de la surface de l'échantillon, et pour produire des signaux en tant que fonction dudit décalage, indépendamment du courant tunnel,
un moyen de servocommande (11) pour commander ledit moyen de déplacement (2) en fonction du retour de données en réaction aux signaux de sortie à partir du moyen de détection du décalage de la sonde (9, 10) pour maintenir constante la distance entre la partie de pointe de la sonde et l'échantillon, amenant ledit moyen de déplacement (2) à déplacer relativement l'échantillon et la sonde,
un moyen de génération de données d'image STS (14, 16, 30) pour former une première donnée d'information d'image tridimensionnelle (image STS, STS : = spectroscopie à effet tunnel) relative à l'état électronique local dans la surface de l'échantillon, laquelle information a été obtenue à partir du courant tunnel détecté par ledit moyen de détection de courant tunnel,
un moyen de génération de données d'image STP (15, 17, 30, 70, 70a, 71) pour former une seconde donnée d'information d'image tridimensionnelle (image STP, STP : = potentiométrie à effet tunnel) relative à la distribution du potentiel dans la surface de l'échantillon, laquelle information a été obtenue à partir du courant tunnel détecté par ledit moyen de détection de courant tunnel, et
un moyen de génération de données d'image AFM (11, 13) pour former une troisième donnée d'information d'image tridimensionnelle (image AFM, AFM: = microscope de force atomaire) concernant la rugosité de la surface de l'échantillon, correspondant à la distance de décalage de la sonde détectée par ledit moyen de détection du décalage de la sonde, de sorte que les images STS, STP et AFM peuvent être obtenues.

2. Microscope à effet tunnel selon la revendication 1, caractérisé en ce que ledit moyen d'application de la tension de polarisation (3, 5, 6) comporte un moyen générateur de tension modulée, pour appliquer entre la sonde et l'échantillon une tension modulée présentant un cycle et une amplitude déterminés, en tant que tension de polarisation, et ledit moyen pour former des données d'image STS, le moyen de formation comportant des moyens arithmétiques (14) pour émettre des conductances différentielles du courant tunnel détecté par ledit moyen de détection de courant tunnel et ladite tension modulée.

3. Microscope à effet tunnel selon la revendication 2, caractérisé en ce que le moyen de formation de données d'image STP comporte un moyen servo de potentiel (15) pour produire une tension adaptée pour commuter le potentiel de la tension de polarisation appliquée à l'échantillon par l'intégration du courant tunnel détecté par ledit moyen de détection du flux de courant tunnel.

4. Microscope à effet tunnel selon la revendication 1, caractérisé en ce que l'encorbellement présente un premier côté sur lequel ladite sonde est montée, un second côté et un film conducteur (7c) attaché au second côté,
ledit moyen de détection du décalage de la sonde comporte une pointe de tunnel (2) prévue à proximité du film conducteur dudit encorbellement,
un moyen d'application de tension de polarisation auxiliaire (21c) pour appliquer une tension de polarisation entre la pointe du tunnel et le film conducteur pour produire un flux de courant tunnel entre lesdits éléments, et
un moyen de détection de courant tunnel auxiliaire (21) pour détecter le flux de courant tunnel produit par la tension de polarisation appliquée par ledit moyen d'impression de tension de polarisation auxiliaire, de sorte que la distance de décalage de ladite sonde peut être détectée conformément au courant tunnel détecté par ledit moyen de détection de courant tunnel auxiliaire (21).

5. Microscope à effet tunnel selon la revendication 4, caractérisé en ce que ledit encorbellement comporte un élément semblable à une plaque, à isolation électrique (7b), présentant un plan et un autre plan, un élément conducteur pour la connexion de ladite sonde audit moyen de détection de courant tunnel auxiliaire, ladite sonde étant prévue sur le premier plan et ledit film conducteur étant prévu sur l'autre plan, et un moyen de mise à terre dudit film conducteur.

6. Microscope à effet tunnel selon la revendication 5, qui comporte un moyen de logarithme arithmétique (24) pour trouver de manière exponentielle le flux de courant tunnel détecté par ledit moyen de détection de courant tunnel auxiliaire et la distance entre la pointe du tunnel et le film conducteur pour produire un signal proportionnel au décalage de l'encorbellement.

7. Microscope à effet tunnel selon la revendication 1, caractérisé en ce que ledit moyen de formation de données d'image STS et ledit moyen de formation de données d'image STP sont constitués par un moyen arithmétiques (30) pour exécuter un processus arithmétique numérique sur le courant tunnel détecté par le moyen de détection de courant tunnel pour produire des données d'image STS et STP.

8. Microscope à effet tunnel selon la revendication 1, caractérisé en ce qu'il comporte un moyen de servocommande auxiliaire (70) pour constituer ledit moyen de déplacement pour le retour de données en réaction au courant tunnel détecté par ledit moyen de détection de courant tunnel, de manière à maintenir constante la distance entre la sonde et l'échantillon, amenant de la sorte ledit moyen de déplacement à déplacer l'échantillon, et un moyen commutateur de connexions (71) pour effectuer des connexions sélectives dudit moyen de servocommande auxiliaire (70) et dudit moyen de servocommande (11) avec ledit moyen de déplacement.
